# EUROPEAN PATENT APPLICATION

(11) **EP 4 005 767 A1**
(43) Date of publication of application: **01.06.2022**
(21) Application number: 21208376.0
(22) Date of filing: 16.11.2021
(51) Int. Cl.: B29C 45/14, F16D 3/84

(54) **INJECTION EQUIPMENT FOR OVERMOULDING A TRILOBATE BOOT**

(30) Priority: 25.11.2020 IT 202000028406
(71) Applicant: Insit Industria S.p.A., 10129 Torino (IT)
(72) Inventor: GALGANI BURGO, Luigi, I-10129 Torino (IT); VISCA, Gianni, I-10129 Torino (IT)
(74) Representative: Buzzi, Franco

(57) **Abstract**

Injection equipment for overmoulding a shaped annular element (8) on a portion of a cover boot (4) for constant velocity joints of motor vehicles. This equipment is provided with a flow circuit for supplying a molten moulding material into an annular chamber (36) for overmoulding the shaped element (8) which comprises a bushing (11) and an inlet channel (15) formed in a fixed plate (1) of the equipment, and an introduction channel comprising a first portion (35) formed between the fixed plate (1) and an intermediate plate (2) of the equipment, and a second portion (34) formed entirely in the intermediate plate (2).

## Description

### Field of the invention

The present invention relates to an injection equipment for overmoulding a shaped annular element on an inner surface of a terminal portion of a cover boot for constant velocity joints of motor vehicles.

Such boots comprise, in a known manner, a tubular body made of flexible material which includes a first terminal portion with larger diameter configured to be applied on the joint, a second terminal portion with smaller diameter configured to be applied on a joint drive shaft, and a bellows-like median portion which joins said terminal portions to each other.

Overmoulding equipment thus made conventionally comprise a fixed plate, an intermediate plate provided with means for internally supporting and externally locking a portion of the boot and for forming - therewith - an annular chamber for overmoulding the shaped element, a movable plate for containing the boot during overmoulding, and a flow circuit comprising an inlet bushing for supplying a molten moulding material provided by a distributor or hot chamber in the overmoulding chamber.

### State of the prior art

Patent EP3323581B1 discloses an injection equipment thus made for overmolding a trilobate annular element on the inner surface of the first terminal portion of a boot for constant velocity joints of the type described, wherein the intermediate plate includes a frusto-conical moulding element for supporting the boot during overmoulding. Such element comprises a distal portion designed to support an inner portion of the bellows of the boot, and a central portion which comprises a shaped annular groove for overmoulding the trilobate element on the boot. The intermediate plate further comprises carriage means for locking the first terminal portion of the boot facing the groove, so as to form an overmoulding chamber of the trilobate element between the first terminal portion of the boot and the groove.

EP3323581B1 provides for a flow circuit for supplying the molten moulding material into the annular chamber which includes sequentially: an injection bushing arranged on the movable plate of the equipment, an introduction channel formed along the axis of the frusto-conical moulding element, a plurality of runners, arranged radially around the introduction channel, tilted downwards, and extending up to the moulding chamber.

Such a conformation of the material flow circuit entails the disadvantage that, during operation, the injection equipment must be positioned so that the axis of the moulding element, and therefore that of the boot which is coaxial thereto, is vertical with respect to the ground during the overmoulding process. The downward tilt of the channels for introducing the plastic material, comprised between 20° and 50°, is actually provided for so as to allow the molten resin material, introduced into the flow circuit through the injection bushing, to "naturally drop down" into the moulding chamber.

Such a limitation of use of the equipment according to EP3323581B1 entails the disadvantage of necessarily having to arrange the distributor or hot chamber above the equipment, therefore significantly complicating the structure thereof. Furthermore, providing for the overmoulding of the boot with the axis thereof perpendicular to the ground makes it more difficult to fully eject the boot from the support thereof.

A further technical problem of the equipment according to EP3323581B1 lies in the positioning of the injection bushing on the movable plate, which entails the need that at least part of the means for supplying the moulding material either be movable with the plate or they be disconnected therefrom at each overmoulding so as to allow the lifting of the plate to insert the boot into the support.

### Summary of the invention

The object of the present invention is to overcome the aforementioned drawback. In order to achieve this object, the invention relates to an injection equipment for overmoulding a shaped annular element on a portion of a cover boot for constant velocity joints of motor vehicles of the type defined in the preamble of claim 1, whose primary characteristic lies in the fact that the inlet bushing of the molten moulding material is arranged at the proximal end of the fixed plate, and in that the flow circuit path comprises: an inlet channel placed in communication with the bushing formed in an element protruding from the fixed plate, the protruding element comprising a distal end surface, and at least one introduction channel connecting the inlet channel with the annular chamber. The at least one introduction channel comprises: a first portion formed between the end surface of the protruding element and an end surface of the proximal portion of the moulding member, and a second portion formed in the body of intermediate plate tangentially to a portion of the lateral surface of the proximal portion of the moulding element.

Thanks to this solution idea, the distributor or hot chamber can advantageously be directly coupled to the inlet bushing provided for on the fixed plate and remain in this position during all the moulding cycles envisaged.

Furthermore, the aforementioned design of the flow circuit for supplying the molten material to the overmoulding chamber according to the invention allows to arrange the equipment with any orientation with respect to the ground, simplifying the structure thereof and facilitating the complete ejection of the boot from the mould, for example by exploiting the force of gravity.

In a preferred embodiment of the invention, the annular overmoulding chamber comprises three first radially equally spaced overmoulding spaces designed to overmould three corresponding thick hemispherical protrusions on the first terminal portion of the boot, and three second overmoulding spaces, alternating with said first spaces, designed to overmould three corresponding thin protrusions.

In an embodiment of the invention, the flow circuit path comprises: three introduction channels connecting the inlet channel to the annular chamber, each introduction channel having a first end placed in communication with the inlet channel, and a second end placed in communication with the moulding chamber, wherein the first portions of the introduction channels extend symmetrically radially from the inlet channel offset by 120° from each other, and the second portions of the channels each terminate in one of the moulding spaces to mould the thick hemispherical protrusion.

In an embodiment, the equipment according to the invention comprises means for removing the boot from the equipment which comprises: a removal plate arranged between the intermediate plate and the fixed plate, the plate being movable between an inoperative position in which it is moved away from the intermediate plate, and a removal position of the boot in which it is approached to the intermediate plate, a tilted movement device comprising at least one tilted column protruding from the plate and fixed thereto by means of a horizontal sliding system, wherein the at least one tilted column is designed to press a portion of the inner surface of the bellows so as to remove the boot from the injection equipment.

According to a further aspect of the invention, the inlet channel placed in communication with the bushing extends in a direction parallel to the axis of the boot, the at least one first portion of the introduction channel extends in a direction perpendicular to the axis of the boot, the at least one second portion of the introduction channel extends in a direction parallel to the axis of the boot and terminates in a proximal end of the overmoulding chamber.

Conveniently, according to the invention, the injection equipment comprises three carriages, each being provided with an oblique seat for the displacement thereof, the movable plate comprises three tilted columns for actuating the carriages arranged in angularly equally spaced positions in proximity of the cavity and protruding from a proximal surface of the movable plate, each with an inclination corresponding to that of the oblique seat of the corresponding carriage to be moved. Each of the columns is designed to slide in one corresponding seat so as to move the corresponding carriage when the movable plate is actuated from the inoperative position, in which it is detached from the intermediate plate, to the operative position, in which it is approached to the intermediate plate, or vice versa.

The invention also relates to an overmoulding process carried out with the equipment according to the invention and a boot having the aforementioned characteristics provided by means of the equipment according to the invention.

### Brief description of the drawings

The invention will now be described in detail with reference to the attached drawings, provided purely by way of non-limiting example, wherein:
- figure 1 is a schematic sectional view of an injection equipment for overmoulding a shaped annular element on a portion of a cover boot according to the invention, represented in a first operating condition,
- figures 2-6 are views similar to figure 1 showing subsequent operating steps of the overmoulding equipment,
- figure 7 is a perspective view showing, by way of example, a boot overmoulded with the equipment according to the invention and already described above,
- figure 8 is a plan view of figure 7, and
- figure 9 is a schematic perspective view showing a part of figure 1 in larger scale.

### Detailed description of the invention

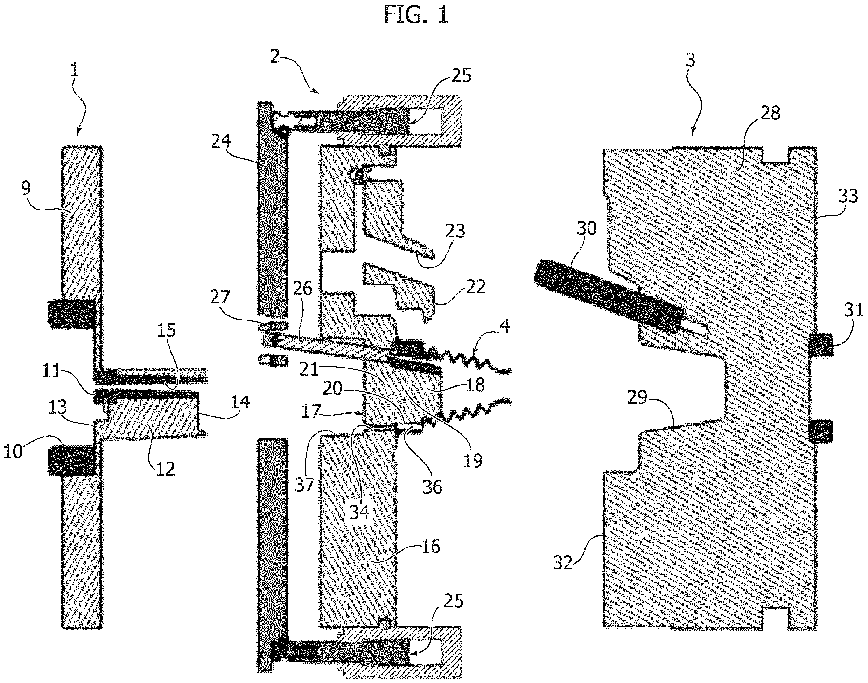

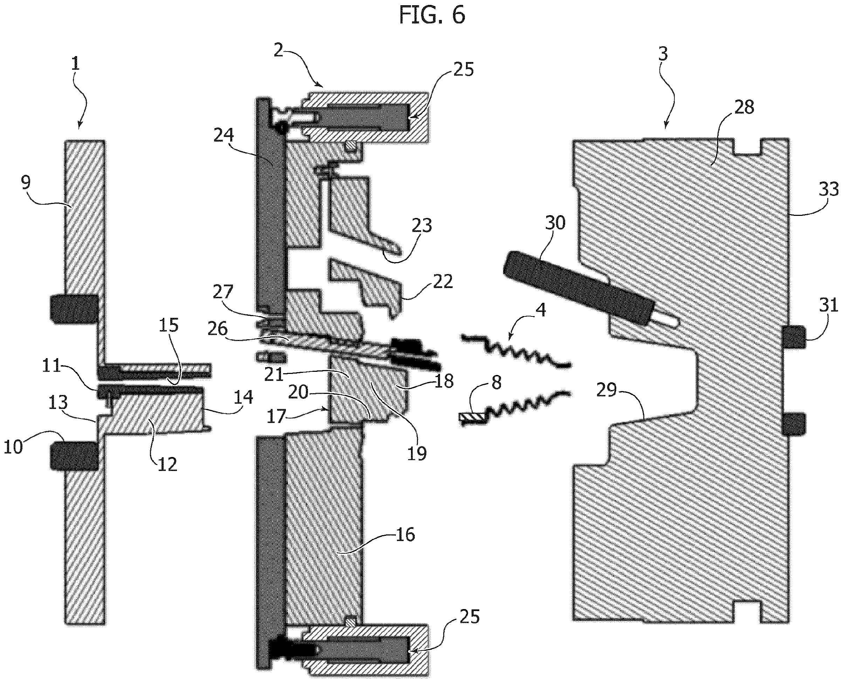

Initially with reference to figures 1 and 6, illustrated is an injection equipment for overmoulding a shaped annular element 8 on a portion of a cover boot 4 for constant velocity joints of motor vehicles according to the invention comprising a fixed plate 1, an intermediate plate 2 and a movable plate 3.

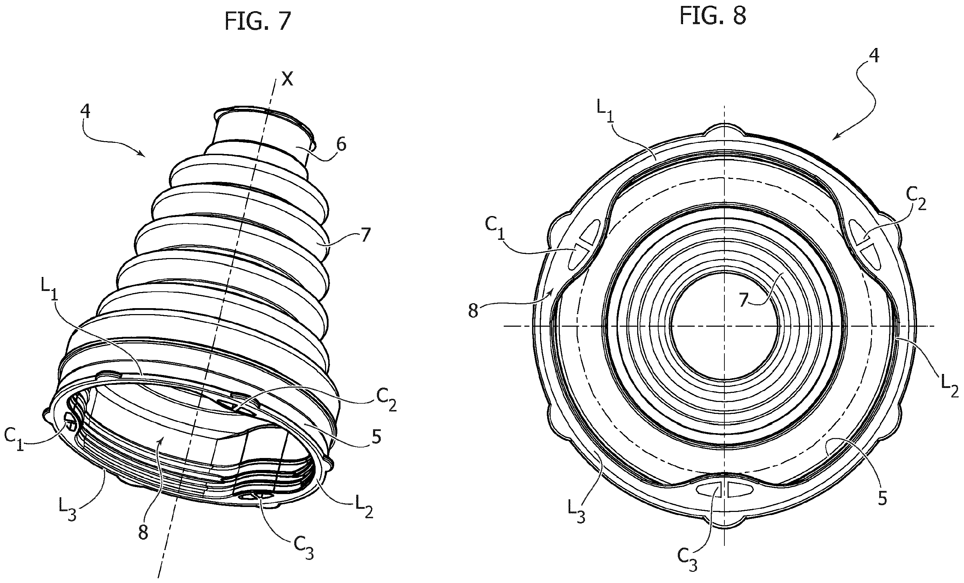

With reference to figure 7, such boot 4 comprises a tubular body made of flexible material having a longitudinal axis X, a first terminal portion with larger diameter 5 configured to be applied on the joint, a second terminal portion with smaller diameter 6 configured to be applied on a drive shaft of the joint, and a bellows-like median portion 7 which joins the terminal portions 5,6 to each other.

In some applications of such boots 4, overmoulding a shaped annular element 8 on the inner surface of the first terminal portion 5 of the boot 4 is required. With reference to figure 8, such annular element 8 may comprise, for example, three thick hemispherical protrusions C₁,C₂,C₃ which are radially equally spaced and connected to each other by respective thin protrusions L₁,L₂,L₃ so as to form a so-called trilobate body 8.

The injection equipment is of the generally conventional type, therefore only the essential components and the components expressly referred to in the invention will be described.

Once again with reference to figure 1, the aforementioned fixed plate 1 comprises a flattened body 9 which provides for a seat 10 for coupling with a distributor or hot chamber of the conventional type, not shown in the drawings, and a cylindrical projecting element 12 opposite and concentric with the seat 10 comprising a proximal end surface 13 and a distal end surface including a groove 14 to be addressed hereinafter. According to one of the distinctive characteristics of the invention, provided for on the proximal end surface 13 is a bushing 11 into which the nozzle of an injector, also per se known and not shown in detail, is inserted. The bushing 11 may basically be identified with the injector, even if it consists of a separate element, given that the terminal part of the injector nozzle, which is configured to introduce - into an overmoulding chamber 36 to be addressed hereinafter - the pressurised plastic material supplied by the distributor or hot chamber, comes into contact therewith.

Obtained in the cylindrical projecting element 12 is a channel 15 for the inlet of the molten material perpendicular to the plate 1 and placed in communication
- in one of the ends thereof - with the bushing 11 and
- in the opposite end - with the groove 14.

The aforementioned intermediate plate 2 comprises a body 16 on which there is obtained frusto-conical moulding element 17, comprising a distal portion 18 designed to support an inner portion of the bellows 7 of the boot 4 in proximity of the first end portion 5 with larger diameter, a central portion 19 comprising a shaped annular groove 20 for overmoulding the annular element 8, and a proximal portion 21.

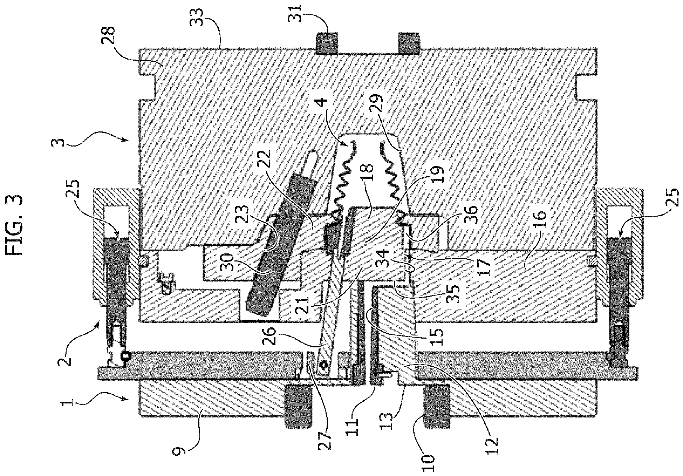

When the equipment according to the invention is in the closing configuration for overmoulding the shaped element 8 visible in figure 3, a portion of the end surface 21 of the moulding element 17 is designed to form - with the groove 14 of the distal end surface of the protruding body 12 - a first portion 35 of a channel for introducing molten material into the overmoulding chamber 36 connected - at one end thereof - to the inlet channel 15.

A second and last portion 34 of the channel for introducing the molten material into the overmoulding chamber 36 is obtained in the body 16 of the intermediate plate 2, tangentially to a portion of the lateral surface of the proximal portion 21 of the moulding element 17. The second portion of the channel 34 is placed in communication - at one end thereof - with the first portion of the channel 35 and - at the opposite end - with a proximal wall of the overmoulding chamber 36.

Conveniently, according to the invention, the bushing 11 and the inlet channel 15 obtained in the fixed plate 1, the first portion 35 of the introduction channel formed between the fixed plate 1 and the intermediate plate 2, and the second portion 34 of the introduction channel formed in the intermediate plate 2 form the flow circuit for supplying the molten moulding material into the annular chamber 36 for overmoulding the annular element 8.

In a preferred embodiment of the invention, not shown so as not to complicate the intelligibility of the figures, the injection equipment comprises three inlet channels which connect the introduction channels 15 to the annular overmoulding chamber 36. Each of the introduction channels comprises a first end 35 placed in communication with the inlet channel 15 and a second end 34 placed in communication with the overmoulding chamber 36. The first portions of the channels 35 extend symmetrically radially from the inlet channel 15 offset by 120° from each other, and the second portions 34 of the channels each terminate in a corresponding moulding space of the chamber 36 to overmould one of the aforementioned equally spaced thick hemispherical protrusions C₁,C₂,C₃ on the first terminal portion 5 of the boot 4.

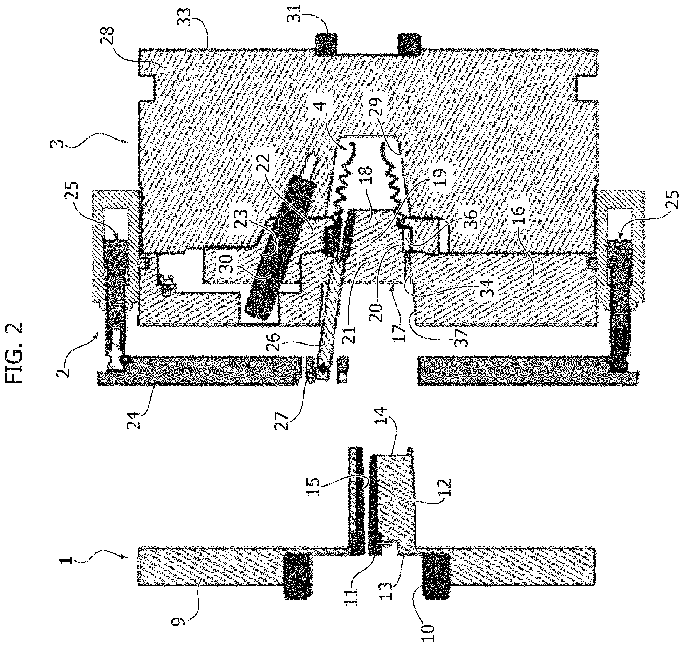

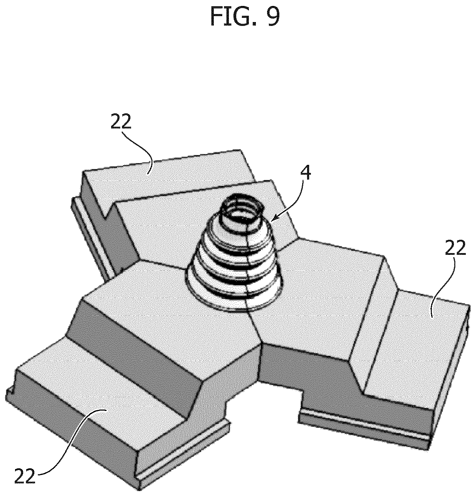

Furthermore, sliding guides, not shown in the figures given that they are known to a person skilled in the art, for three carriages 22 better visible in figure 9, are provided for on the body 16 of the intermediate plate 2. The carriages 22 are slidable between an inoperative position, in which they are radially spaced from the moulding element 17, and a position for locking the boot 4, visible in figure 2, in which they are approached to the moulding element 17 so as to circumferentially lock the first terminal portion 5 of the boot 4 facing the groove 20. Each of the carriages 22 is provided with an oblique seat 23 for the displacement thereof to be addressed hereinafter.

When the boot 4 is inserted into the moulding element 17, and the carriages 22 are in the aforementioned locking position in the condition shown in figures 2-5, there is defined an overmoulding chamber 36 whose shape, defined by the groove 20, corresponds to that of the element to be overmoulded, for example, the trilobate body indicated with 8 in figure 9. It is obvious that the overmoulding chamber 36 may have any different configuration.

Furthermore, the intermediate plate 2 includes means for removing the boot 4 from the moulding element 17 which comprise a removal plate 24, arranged between the intermediate plate 2 and the fixed plate 1, and comprising a central opening 37 for the protruding element 12 of the fixed plate 1. The removal plate 24 can be moved by means of a hydraulic cylinder device 25, between an inoperative position in which it is moved away from the intermediate plate 2, and a position for removing the boot 4 in which it is approached to the intermediate plate 2. The removal plate 24 further comprises a tilted movement device, comprising three tilted columns 26, protruding from the plate 24 and hinged thereto - at the proximal ends thereof - by means of a sliding system 27.

When the removal plate 24 is moved - approaching the intermediate plate 2 - by the hydraulic cylinders 25, the distal portions of the tilted columns 26 are designed to press a portion of the inner surface of the bellows 7 of the boot 4 and the tilted direction of the columns 26 allows to carry out synchronised displacement of the boot 4 both in the removal direction and in a direction perpendicular to the axis X of the boot 4, releasing it from the moulding element 17 and allowing the removal thereof from the equipment, for example by dropping.

The aforementioned movable plate 3 comprises a body 28 and it can be moved by means of hydraulic or electrical actuation means, not shown given that they are known to a person skilled in the art, between an inoperative position in which it is detached from the intermediate plate 2, for positioning the boot 4 on the moulding element 17, and an operative position in which it is approached to the intermediate plate 2. The body 28 comprises a cavity 29 for housing the portion of the boot 4 protruding from the moulding element 17 of the intermediate plate 2, so that when the movable plate 3 is in the aforementioned operative position, the boot 4 is sealed and ready for overmoulding the shaped annular element 8.

The movable plate 3 further comprises three tilted columns 30, each provided for the displacement of a respective carriage 22. The columns 30 are arranged in angularly equally spaced positions in proximity of the cavity 29 and protrude from a proximal surface 32 from the movable plate 3 each with an inclination corresponding to that of the oblique seat 23 of the corresponding carriage 22 to be moved as mentioned hereinafter.

Furthermore, the movable plate 3 is provided, on a distal end surface 33 thereof, with coupling means 31 with the means for actuating the plate 3.

The equipment according to the invention operates as follows.

The step shown in figure 1 corresponds to a configuration of full opening of the overmoulding equipment in which it is possible to position the boot 4 on the moulding element 17 so that the respective axes are aligned.

The step shown in figure 2 corresponds to a configuration of partial closure of the overmoulding equipment and locking of the boot 4 in which the movable plate 3 is moved to the operative position thereof containing the boot 4. During the displacement of the movable plate 3 from the inoperative position to the operative position, each of the tilted columns 30 slides in a respective seat 23 so as to move the corresponding carriage 22 to the aforementioned position for locking the first terminal portion 5 of the boot 4 facing the groove 20 so as to form the overmoulding chamber 36.

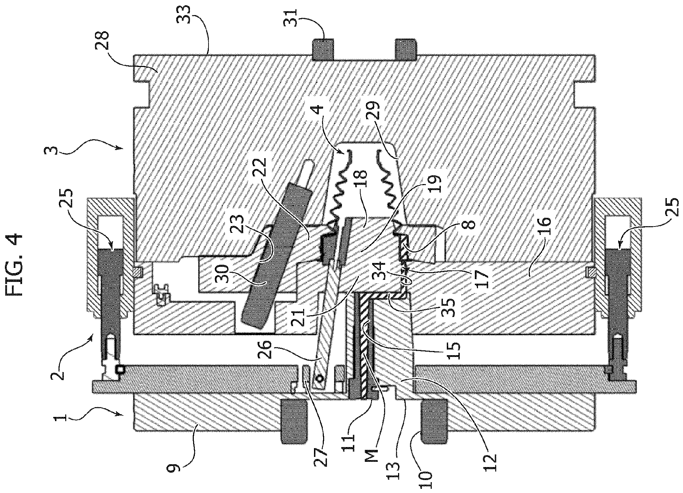

The step shown in figure 3 corresponds to a configuration of full closure of the overmoulding equipment and figure 4 shows the step subsequent to the injection or filling of the plastic material into the overmoulding chamber 36, so-called maintenance step.

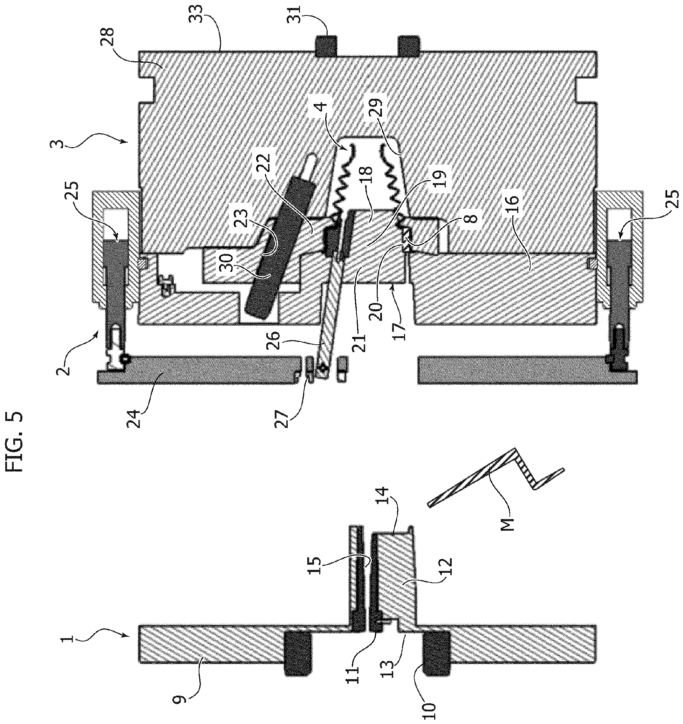

The step shown in figure 5 corresponds to a configuration of partial opening of the overmoulding equipment in which the intermediate plate 2 is moved away from the fixed plate 1 for the detachment and ejection of the so-called riser M from the equipment. The step shown in figure 6 corresponds to a configuration of full opening of the overmoulding equipment for ejecting the boot 4 in which the movable plate 3 is moved away from the intermediate plate 2 in the inoperative position thereof. During this displacement, each of the columns 30 slides in the respective seat 23 so as to move the corresponding carriage 22 to the position for unlocking the boot 4. The removal plate 24 is approached to the intermediate plate 2 in the aforementioned removal position so that the tilted columns 26 press on the portion of the inner surface of the bellows 7 so as to remove the boot 4 from the injection equipment.

The injection equipment according to the invention is now ready for overmoulding a new shaped annular element 8 on the first end portion 5 of a new boot 4.

Obviously, the construction details and the embodiments may widely vary with respect to what has been described and illustrated, without departing from the scope of protection of the present invention as defined in the claims that follow.

## Claims

1. Injection equipment for overmoulding a shaped annular element (8) on a portion of a cover boot (4) for a constant velocity joint of motor vehicles,
said boot (4) comprising a tubular body made of flexible material having a longitudinal axis (X), a first terminal portion (5) with larger diameter configured to be applied on the joint, a second terminal portion (6) with smaller diameter configured to be applied on a drive shaft of the joint, and a bellows-like median portion (7) which joins said terminal portions (5,6) to each other,
said shaped annular element (8) being provided for on the inner surface of said first terminal portion (5),
said equipment comprising:
- a fixed plate (1) comprising a flattened body (9) including a proximal end surface (13),
- an intermediate plate (2) detachable from said fixed plate (1) comprising a body (16) and including:
• a frusto-conical moulding element (17) coaxial to the boot (4) comprising a distal portion (18) designed to support an internal portion of said bellows (7) of the boot (4), a central portion (19) comprising a shaped annular groove (20) for overmoulding said annular element (8), and a proximal portion (21),
• carriage means (22) slidable between an inoperative position spaced from said moulding element (17), and a position for locking said first terminal portion (5) of the boot (4) facing said groove (20), said first terminal portion (5) of the boot (4) and said groove (20) forming an overmoulding chamber (36) of said shaped annular element (8),
- a movable plate (3) comprising a cavity (29) for housing the portion of the boot (4) protruding from the moulding element (17) comprising said second end portion (6),
said plate (3) being movable between an inoperative position in which it is detached from said intermediate plate (2), for positioning the boot (4) on said moulding element (17), and an operative position for containing the boot (4) in said cavity (29) in which it is approached to said intermediate plate (2),
- a flow circuit for supplying a molten moulding material into said annular overmoulding chamber (36) for overmoulding said annular element (8), said circuit comprising an inlet bushing (11) and a path connecting said bushing (11) with said overmoulding chamber (36), **characterised in that**
said bushing (11) is arranged on said proximal end (13) of said fixed plate (1), and **in that** said flow circuit path comprises:
- an inlet channel (15) placed in communication with said bushing (11) formed in a protruding element (12) projecting from said fixed plate (1), said protruding element (12) comprising a distal end surface (14),
- at least one introduction channel which connects said inlet channel (15) with said overmoulding chamber (36), said at least one introduction channel comprising:
• a first portion (35) formed between said distal end surface (14) of said protruding element (12) and an end surface of said proximal portion (21) of said moulding element (17), and
• a second portion (34) formed into the body (16) of the intermediate plate (2) tangentially to a portion of the lateral surface of the proximal portion (21) of the moulding element (17).

2. Injection equipment according to claim 1, **characterised in that** said overmoulding annular chamber (36) comprises three first radially equally spaced overmoulding spaces designed to overmould three corresponding thick hemispherical protrusions (C₁,C₂,C₃) on said first terminal portion (5) of the boot (4), and three second overmoulding spaces alternating with said first spaces and designed to overmould three corresponding thin protrusions (L₁,L₂,L₃).

3. Injection equipment according to claim 2, **characterised in that** said flow circuit path comprises:
three of said introduction channels which connect said inlet channel (15) with said overmoulding chamber (36), each introduction channel having a first end (35) placed in communication with said inlet channel (15), and a second end (34) placed in communication with said overmoulding chamber (36), wherein:
the first portions (35) of said introduction channels extend symmetrically radially from said inlet channel (15) and offset by 120° from each other, and
the second portions (34) of said channels each terminate into one of said moulding spaces for overmoulding said thick hemispherical protrusions (C₁,C₂,C₃).

4. Injection equipment according to any one of the preceding claims, **characterised in that** it comprises means for removing said boot (4) from said equipment, said removal means comprising:
- a removal plate (24) arranged between said intermediate plate (2) and said fixed plate (1), said removal plate (24) being movable between an inoperative position in which it is moved away from said intermediate plate (2), and a position for removing the boot (4) in which it is approached to said intermediate plate (2),
- a tilted movement device comprising at least one tilted column (26) protruding from said removal plate (24) and fixed thereto by means of a sliding system (27),
said at least one tilted column (26) being designed to push a portion of the inner surface of said bellows (7) so as to remove the boot (4) from said injection equipment during the movement of said removal plate (24) from said inoperative position to said removal position.

5. Injection equipment according to any one of the preceding claims, **characterised in that**:
said inlet channel (15) extends in a direction parallel to the axis (X) of the boot (4),
said at least one first portion (35) of the introduction channel extends in a direction perpendicular to the axis (X) of the boot (4),
said second portion (34) of the introduction channel extends in a direction parallel to the axis (X) of the boot (4) and terminates in a proximal wall of said overmoulding chamber (36).

6. Injection equipment according to any one of the preceding claims, **characterised in that** it comprises three carriage means (22), each one of said carriage means (22) being provided with an oblique seat (23) for the displacement thereof,
said movable plate (3) comprises three tilted columns (30) for actuating said carriages (22) arranged in angularly equally spaced positions in proximity of said cavity (29) and protruding from a proximal surface (32) of said movable plate (3) each with an inclination corresponding to that of said oblique seat (23) of the corresponding carriage (22) to be moved,
each of said columns (30) being designed to slide in one of said seats (23) so as to move the corresponding carriage (22) when said movable plate (3) is actuated from said inoperative position, in which it is detached from said intermediate plate (2), to said operative position, in which it is approached to said intermediate plate (2), or vice versa.

7. Overmoulding process implemented with the equipment according to one or more of claims 1 to 6.

8. Cover boot (4) for a constant velocity joint for motor vehicles, comprising a tubular body made of flexible material having a longitudinal axis (X), a first terminal portion (5) with larger diameter configured to be applied on the joint, a second terminal portion (6) with smaller diameter configured to be applied on a drive shaft of the joint, and a bellows-like median portion (7) which joins said terminal portions (5,6) to each other, said boot comprising a trilobate annular element (8) overmoulded on the inner surface of said first terminal portion (5), said trilobate annular element comprising three radially equally spaced thick hemispherical protrusions (C₁,C₂,C₃) and three thin protrusions (L₁,L₂,L₃) alternating with said thick hemispherical protrusions (C₁,C₂,C₃), said boot (4) being made using the equipment according to one or more of claims 1 to 6.
